# EUROPEAN PATENT APPLICATION

(11) **EP 4 242 764 A1**
(43) Date of publication of application: **13.09.2023**
(21) Application number: 21923108.1
(22) Date of filing: 25.11.2021
(51) Int. Cl.: G05B 23/02

(54) **COPING METHOD PRESENTATION SYSTEM, COPING METHOD PRESENTATION METHOD, AND PROGRAM**

(30) Priority: 29.01.2021 JP 2021013903
(71) Applicant: Mitsubishi Heavy Industries, Ltd., Tokyo 100-8332 (JP)
(72) Inventor: HATTORI Miri, Yokohama-shi, Kanagawa 220-8401 (JP); ISHIGAKI Hiroyasu, Yokohama-shi, Kanagawa 220-8401 (JP); GOTO Daisuke, Yokohama-shi, Kanagawa 220-8401 (JP)
(74) Representative: Studio Torta S.p.A.
(86) International application number: PCT/JP2021/043233
(87) International publication number: WO 2022/163103

(57) **Abstract**

A first aid presentation system includes a storage unit that stores one piece or a plurality of pieces of alarm master information associated with each alarm issued from one or a plurality of monitoring targets, information representing each first aid associated with each piece of the alarm master information, and information representing a time series relationship between the respective pieces of alarm master information, and a presentation unit that acquires, from the storage unit, and presents the first aid associated with the alarm master information corresponding to a designated alarm and information relating to another piece of the alarm master information having the relationship with the alarm master information.

## Description

### Technical Field

The present disclosure relates to a first aid presentation system, a first aid presentation method, and a program. Priority is claimed to Japanese Patent Application No. 2021-013903, filed January 29, 2021, the contents of which are incorporated herein by reference.

### Background Art

In the related art, PTL 1 discloses a plant security management system in which an apparatus damage event database and a process abnormality event database are used in combination and associated with a causal relationship database to provide an operator with information such as a presumed cause and an event that may spill over as information on security management regarding a process event and an apparatus state.

### Citation List

### Patent Literature

[PTL 1] Japanese Unexamined Patent Application Publication No. 2009-20787

### Summary of Invention

### Technical Problem

However, there is a problem that the plant security management system described in PTL 1 does not have a configuration for presenting, in a case where an event that requires a first aid occurs, an appropriate first aid for the event.

The present disclosure has been made to solve the above problems, and an object of the present disclosure is to provide a first aid presentation system, a first aid presentation method, and a program capable of appropriately presenting a first aid.

### Solution to Problem

In order to solve the above problem, a first aid presentation system according to the present disclosure includes a storage unit that stores one piece or a plurality of pieces of alarm master information associated with each alarm issued from one or a plurality of monitoring targets, information representing each first aid associated with each piece of the alarm master information, and information representing a time series relationship between the respective pieces of alarm master information, and a presentation unit that acquires, from the storage unit, and presents the first aid associated with the alarm master information corresponding to a designated alarm and information relating to another piece of the alarm master information having the relationship with the alarm master information.

A first aid presentation method according to the present disclosure includes a step of using a storage unit that stores one piece or a plurality of pieces of alarm master information associated with each alarm issued from one or a plurality of monitoring targets, information representing each first aid associated with each piece of the alarm master information, and information representing a time series relationship between the respective pieces of alarm master information to acquire, from the storage unit, and present the first aid associated with the alarm master information corresponding to a designated alarm and information relating to another piece of the alarm master information having the relationship with the alarm master information.

A program according to the present disclosure causes a computer to execute a step of using a storage unit that stores one piece or a plurality of pieces of alarm master information associated with each alarm issued from one or a plurality of monitoring targets, information representing each first aid associated with each piece of the alarm master information, and information representing a time series relationship between the respective pieces of alarm master information to acquire, from the storage unit, and present the first aid associated with the alarm master information corresponding to a designated alarm and information relating to another piece of the alarm master information having the relationship with the alarm master information.

### Advantageous Effects of Invention

According to the first aid presentation system, the first aid presentation method, and the program of the present disclosure, it is possible to appropriately present the first aid.

### Brief Description of Drawings

Fig. 1 is a system diagram showing a configuration example of a first aid presentation system according to an embodiment of the present disclosure.
Fig. 2 is a block diagram showing a configuration example of a Web server shown in Fig. 1.
Fig. 3 is a schematic diagram for describing an operation example of the first aid presentation system according to the embodiment of the present disclosure.
Fig. 4 is a schematic diagram showing a configuration example of a first aid database shown in Fig. 2.
Fig. 5 is a flowchart showing an outline of the operation example of the first aid presentation system according to the embodiment of the present disclosure.
Fig. 6 is a schematic diagram showing a display example in a user terminal shown in Fig. 1.
Fig. 7 is a flowchart showing the operation example of the first aid presentation system according to the embodiment of the present disclosure.
Fig. 8 is a schematic diagram showing a display example in the user terminal shown in Fig. 1.
Fig. 9 is a schematic block diagram showing a configuration of a computer according to at least one embodiment.

### Description of Embodiments

Hereinafter, a first aid presentation system, a first aid presentation method, and a program according to an embodiment of the present disclosure will be described with reference to drawings. In each figure, the same reference numeral is used for the same or corresponding configuration, and description thereof will be omitted as appropriate.

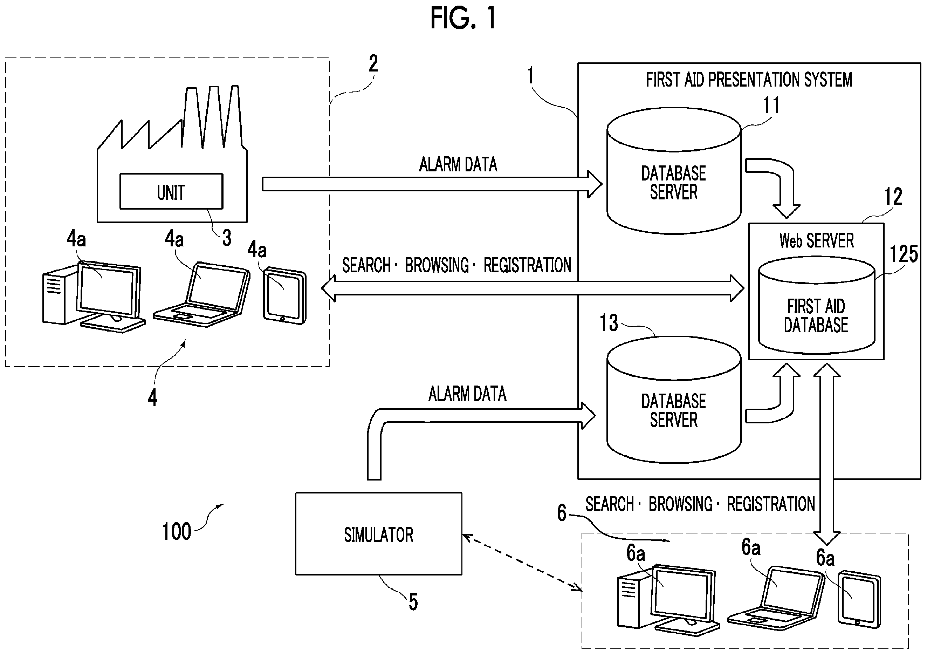

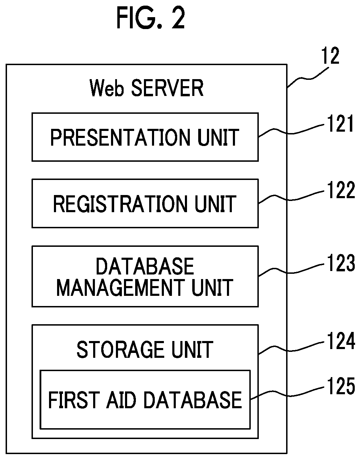

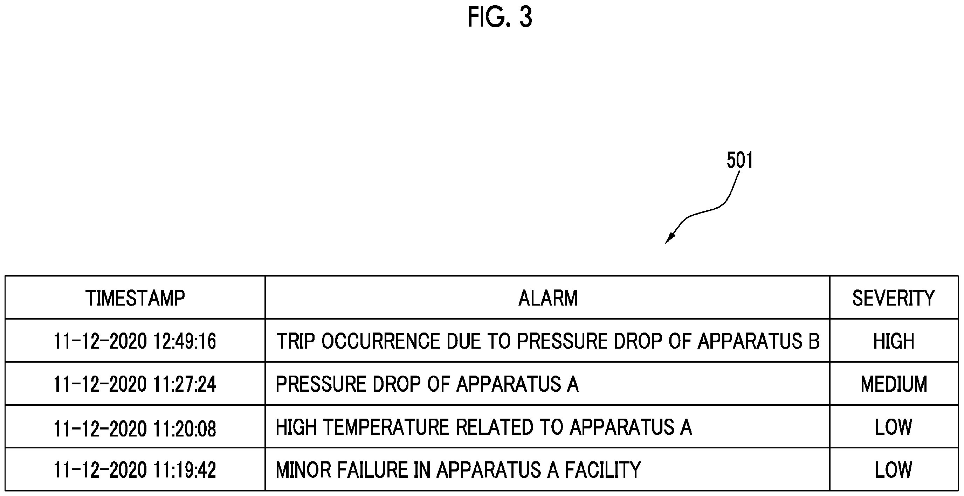

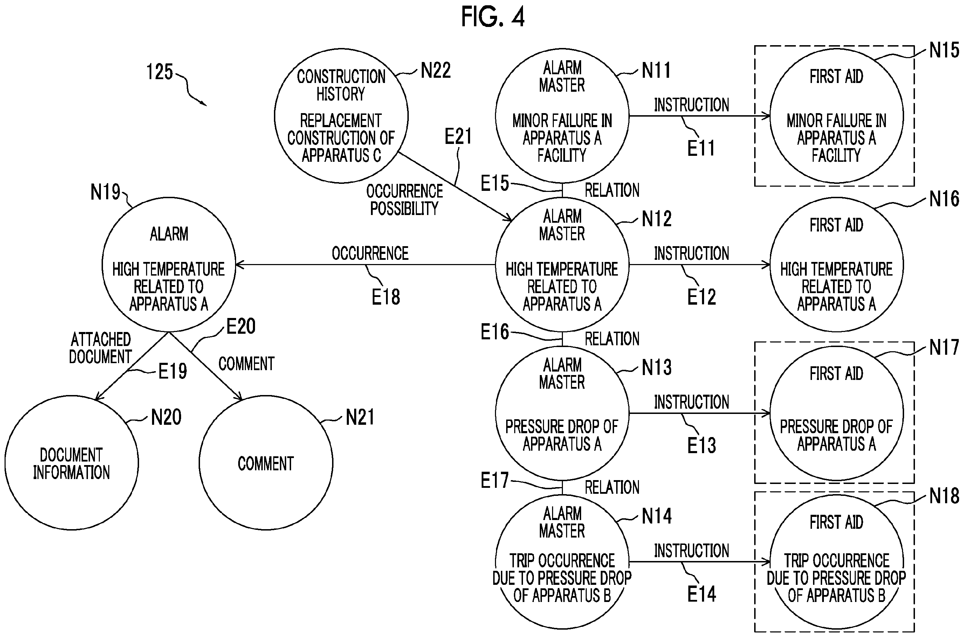

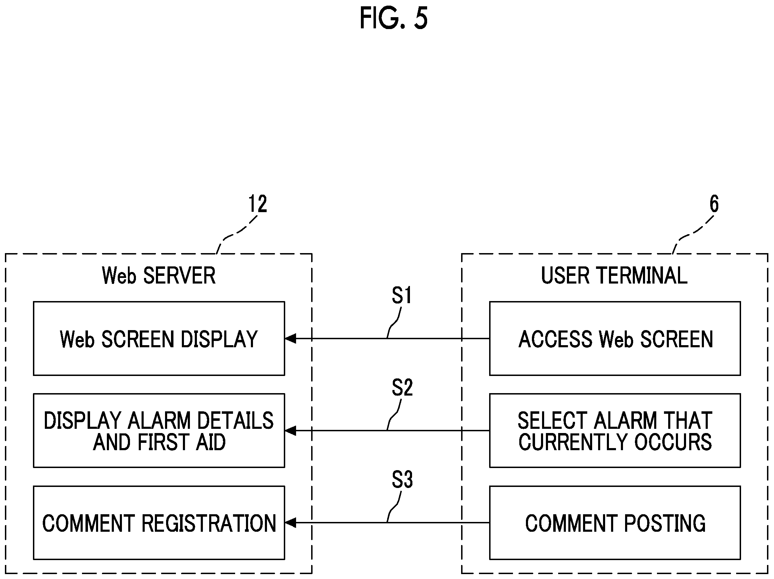

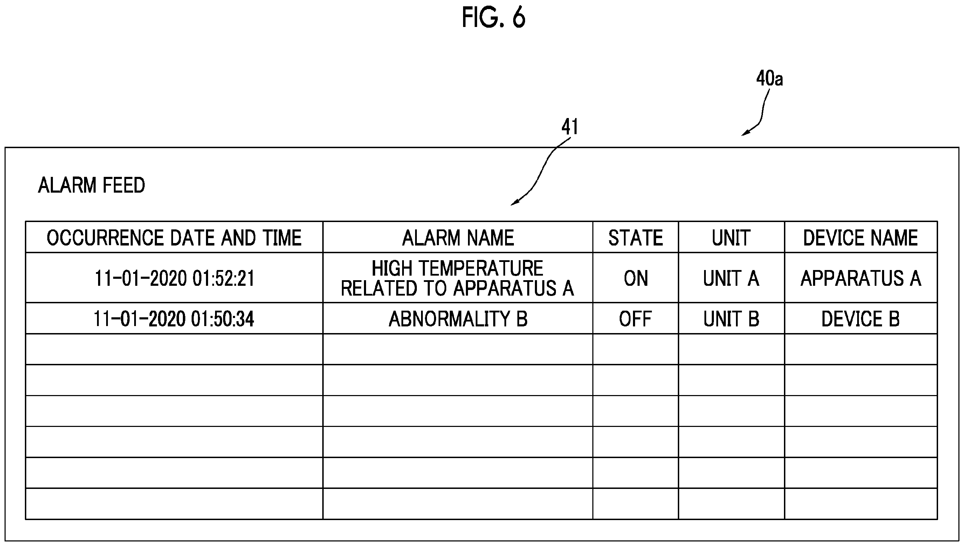

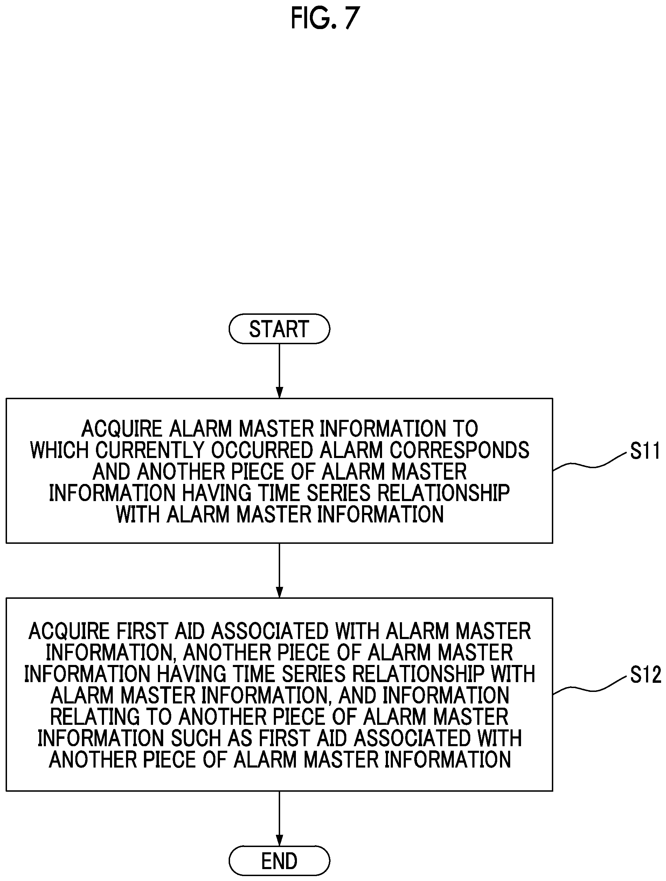

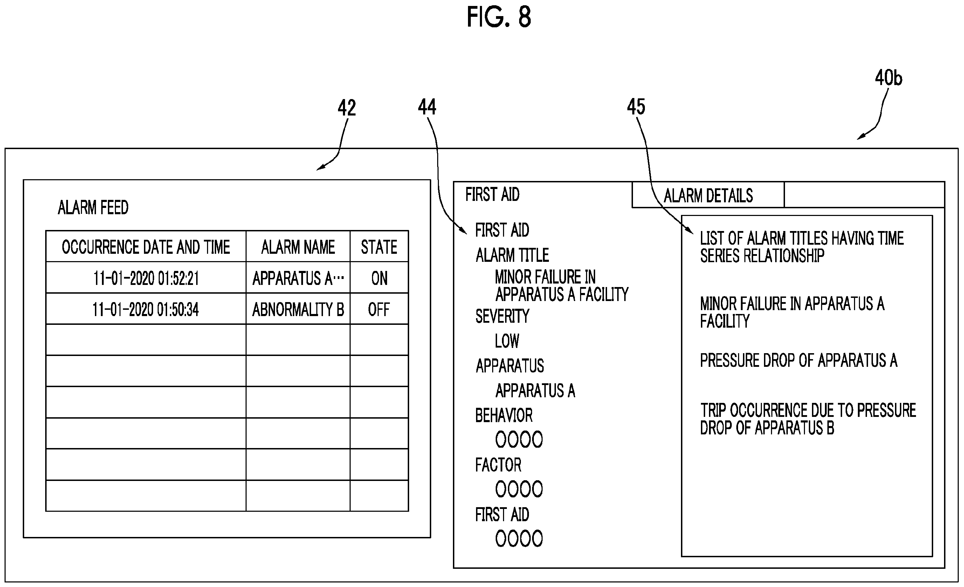

Fig. 1 is a system diagram showing a configuration example of the first aid presentation system according to the embodiment of the present disclosure. Fig. 2 is a block diagram showing a configuration example of a Web server shown in Fig. 1. Fig. 3 is a schematic diagram for describing an operation example of the first aid presentation system according to the embodiment of the present disclosure. Fig. 4 is a schematic diagram showing a configuration example of a first aid database shown in Fig. 2. Fig. 5 is a flowchart showing an outline of the operation example of the first aid presentation system according to the embodiment of the present disclosure. Fig. 6 is a schematic diagram showing a display example in a user terminal shown in Fig. 1. Fig. 7 is a flowchart showing the operation example of the first aid presentation system according to the embodiment of the present disclosure. Fig. 8 is a schematic diagram showing a display example in the user terminal shown in Fig. 1.

### (Configuration of First aid Presentation System)

A first aid presentation system 1 shown in Fig. 1 has a database server 11, a Web server 12, and a database server 13, as a functional configuration configured by a combination of a computer, hardware such as a peripheral device of the computer, and software such as a program executed by the computer and data to be processed. The first aid presentation system 1 is configured as one element of a remote monitoring system 100 that remotely monitors alarm data issued from a monitoring target such as a unit 3 provided in a plant 2 such as a power plant.

The database server 11 accumulates the alarm data issued from the monitoring target such as the unit 3 provided in the plant 2 such as a power plant. The database server 11 receives the alarm data transmitted from the plant 2, and accumulates and manages the received alarm data in a database. The alarm data is information issued, in a case where predetermined abnormality (event indicating an abnormal state) is confirmed, by a computer (not shown) that monitors the monitoring target with the unit 3, an apparatus, a device, a facility, or the entire plant as the monitoring target, and represents, for example, a date and time when the abnormality is confirmed, identification information of the monitoring target, and contents of the abnormality. In addition to the alarm data, event data indicating that a predetermined event indicating occurrence of a predetermined state or a state change has occurred is also transmitted from the plant 2 to the database server 11.

The database server 13 accumulates the alarm data issued by a simulator 5. The alarm data issued by the simulator 5 has the same format as the alarm data issued by the plant 2.

The Web server 12 includes a first aid database 125, and has a function of performing a search from the first aid database 125 for the alarm data issued from the plant 2 and performing presentation to a user terminal 4 and a function of performing a search from the first aid database 125 for the alarm data issued from the simulator 5 simulating the plant 2 and performing presentation to a user terminal 6. The Web server 12 provides functions such as search, browsing, and registration to the user terminal 4 and the user terminal 6 on a Web system via a network, and provides information indicating a first aid. The user terminal 4 and the user terminal 6 are terminals such as a server, a desktop personal computer, a notebook personal computer, and a tablet terminal, and include a display unit 4a and a display unit 6a. The user terminal 4 is, for example, a terminal used at the time of operation of the unit 3 or the like in the plant 2. The user terminal 6 is, for example, a terminal used by a trainee and a trainer when an operator of the plant 2 trains the operation of the plant 2.

In the first aid presentation system 1, for example, selection is made between an "actual operation mode" and a "training mode" for operation, and switching can be made between an "actual plant environment" by the database server 11 and a "simulator environment" by the database server 13 according to the mode. Further, a Web server 12a presents the first aid for the user terminal 4 based on the alarm data issued by the plant 2 and updates the first aid database 125 in the "actual operation mode", and presents the first aid for the user terminal 6 based on the alarm data issued by the simulator 5 and updates the first aid database 125 in the "training mode". The Web server 12 shares the first aid database 125 for the alarm data from the plant 2 and the alarm data from the simulator 5. A configuration example and the like of the first aid database 125 will be described below.

The simulator 5 simulates the operation of each unit or the like of the plant 2 to generate the alarm data by, for example, using a machine learning model or using a model in which a physical model and a simple model are combined. An operation of the simulator 5 is performed, for example, from the user terminal 6. In this case, it is desirable that the simulator 5 has, for example, the following functions. That is, it is desirable that the simulator 5 includes a function of plant operation (start/stop), a function of simulation execution speed change, a backtrack function (returning simulator state to past state and retraining), a function of setting change of an operation condition (for example: atmospheric temperature, cooling water temperature, or the like), a function of setting of an accident item, a pseudo-generation function, and the like.

In this case, it is possible to accumulate knowledge for first aid for alarm by using training data issued by the simulator 5. With the above configuration, it is possible to construct a mechanism capable of accumulating and utilizing knowledge for an alarm (hereinafter referred to as "rare alarm") that occurs less frequently in actual operation due to the use of the simulator 5.

### (Configuration of Web Server)

The Web server 12 includes, for example, a presentation unit 121, a registration unit 122, a database management unit 123, and a storage unit 124 as a functional configuration configured of a combination of hardware and software, as shown in Fig. 2. Further, the storage unit 124 stores the first aid database 125. Here, a configuration example of the first aid database 125 will be described with reference to Figs. 3 and 4.

Fig. 3 shows an example of a time series 501 of the alarm data (rare alarm) created by the simulator 5 used when the first aid database 125 is constructed. When the first aid database 125 is constructed, the following events are generated in a pseudo manner using the simulator 5 to output the rare alarm caused by these events. An abnormality event that is thought to occur about once every few years, such as "abnormality of auxiliary apparatus" or "abnormality of control valve", work or the like related to a plant facility change, such as "replacement construction of electric heating pipe" or "update of hardware such as combustor", and an execution speed on the simulator are accelerated to output a change in an alarm occurrence situation according to the passage of time to the simulator 5 as data. The time series 501 shown in Fig. 3 is an example in which an alarm for minor failure in an apparatus A facility with low severity occurs at 11:19:42 on November 12, 2020, an alarm for high temperature related to the apparatus A with low severity occurs at 11:20:08 on November 12, 2020, an alarm for pressure drop of the apparatus A with medium severity occurs at 11:27:24 on November 12, 2020, and an alarm for trip occurrence due to pressure drop of an apparatus B with high severity occurs at 12:49:16 on November 12, 2020. In the above example, the alarm related to the apparatus A is issued at the beginning of the abnormality occurrence, and the alarm related to the apparatus B is issued with the passage of time. As shown in Fig. 3, in a case where a content that "rare alarms related to the apparatus A and the apparatus B occur due to certain events" is found on the simulator, a relationship of the first aid database 125 to the above alarms on the knowledge base is provided. With the provided relationship, if any of these alarms actually occurs in actual operation in the future, the first aid presentation system 1 may recommend to check first aid (first aid) of another alarm at the same time.

Fig. 4 shows a configuration example of the first aid database 125 shown in Fig. 2. The first aid database 125 shown in Fig. 4 is configured as a graph database. The graph database is a database having a graph structure, and expresses a "relationship" between nodes by three elements of "node", "edge", and "property". A node represents a target object, an edge represents a relationship between nodes, and a property represents a node-edge attribute. In the graph database, a search that traces connection is performed at high speed. The graph database is less affected by an increase in data amount as compared with a relational database or the like in which the entire database is searched, and thus the connection-tracing search is performed at high speed. Further, there is an advantage that the data definition is easy to visually understand from a developer's point of view.

The first aid database 125 shown in Fig. 4 has nodes N11 to N22 and edges E11 to E21. Fig. 4 shows only one node for each type classified by labels "construction history", "alarm", "document information", and "comment". However, the number of nodes is not limited to one, and there are usually a plurality of nodes.

The nodes N11 to N14 are nodes representing alarm master information. The alarm master information is data that is the basis of alarm data. The nodes N11 to N14 have properties such as an alarm name, a unit name, a device name, and an alarm classification. The node N11 has the property of "minor failure in apparatus A facility", and is associated with the node N15 by the instruction edge E11 and is associated with the node N12 by the relation edge E15. The node N12 has the property of "high temperature related to apparatus A", and is associated with the node N16 by the instruction edge E12, is associated with the node N13 by the relation edge E16, and is associated with the node N19 by the occurrence edge E18, respectively. The node N13 has the property of "pressure drop of apparatus A", and is associated with the node N17 by the instruction edge E13 and is associated with the node N14 by the relation edge E17. The node N14 has the property of "trip occurrence due to pressure drop of apparatus B" and is associated with the node N18 by the instruction edge E14.

The nodes N15 to N18 are nodes representing the first aid (first aid) and represent the first aid and the like for the alarm master represented by the nodes N11 to N14. The nodes N15 to N18 have properties such as an alarm name (alarm title), behavior, a factor, and a first aid. In this case, the nodes N15 to N18 have the respective properties of "minor failure in apparatus A facility", "high temperature related to apparatus A", "pressure drop of apparatus A", and "trip occurrence due to pressure drop of apparatus B".

The node N19 is a node representing an occurred alarm. The node N19 has properties such as an occurrence date and time, an alarm name, a state, a unit, and a device name. The node N19 is associated with the node N20 by the comment edge E19 and is associated with the node N21 by the attached document edge E20. The node N19 does not extend a master edge toward the node N12 and reversely traces the occurrence edge E18 to define connection to the node N12. With the above, an information amount can be saved. However, in a case where a frequency of tracing is high, an edge may be defined.

The node N20 is a node representing the document information (registration information) registered by a user for the alarm of the node N19. The document is, for example, a document (document, document file that can be downloaded on Web, Web page, or the like) referred to at the time of the first aid for the alarm. The node N20 has properties such as a document name and a uniform resource locator (URL) of a reference destination of the document.

The node N21 is a node representing a comment (registration information) registered by the user for the alarm of the node N19. The comment is, for example, a sentence relating to the first aid for the alarm. The node N21 has properties such as character information representing a content of the comment.

The node N22 is a node representing the construction history. The node N22 has, for example, properties such as a construction content, a construction implementation date and time, and an elapsed period during which monitoring is required after the implementation (node N22 has the property of "replacement construction of apparatus C" in this example). The node N22 is associated with the node N12 by an occurrence possibility edge E21. However, one node representing the construction history may be associated with a plurality of alarm master nodes.

Returning to Fig. 2, the presentation unit 121 refers to the first aid database 125 to acquire, from the storage unit 124, a first aid associated with alarm master information corresponding to an alarm designated by the user and information relating to another piece of alarm master information such as a first aid associated with another piece of alarm master information having a time series relationship with the alarm master information, and presents the acquired method and information to the user terminal 4 or the user terminal 6.

The registration unit 122 newly registers the comment and the document information (registration information) in the first aid database 125 in association with the alarm designated by the user. Further, in the present embodiment, the registration information is information representing at least one of the comment relating to the first aid for the alarm designated by the user or the document referred to at the time of the first aid for the designated alarm.

The database management unit 123 searches for and updates the first aid database 125 in accordance with instructions from the presentation unit 121, the registration unit 122, and the like.

### (Operation Example of First aid Presentation System)

Next, an operation example of the first aid presentation system 1 shown in Figs. 1 and 2 will be described with reference to Figs. 5 to 8. Fig. 5 shows a flow of processing when the user accesses a Web screen displayed by the Web server 12 from the user terminal 6 (step S1), selects, for example, an alarm that currently occurs to check detailed information on the alarm and the first aid (step S2), and further registers the comment for the alarm (step S3).

In step S1, the Web server 12 (presentation unit 121) presents information for displaying, for example, a screen 40a shown in Fig. 6 on the user terminal 6. The screen 40a shown in Fig. 6 includes a list 41 of alarm data (two in this example) displayed by the user designating, for example, the plant 2 or the unit 3. In this case, in the list 41, each record representing the alarm data includes each item of the occurrence date and time, the alarm name, the state (whether or not the state is continued), the unit, and the device name.

In step S2, assuming that the user selects, for example, top alarm data ("high temperature related to apparatus A") on the screen 40a, the Web server 12 (presentation unit 121) presents information for displaying, for example, a screen 40b shown in Fig. 8 on the user terminal 6 by a flow of processing shown in Fig. 7. The screen 40b shown in Fig. 8 includes a list 42 of alarm data, a display region 44 representing first aid (first aid) information corresponding to the selected alarm data, and a display region 45 representing a list of other alarm masters having a time series relationship with the selected alarm data. Here, processing of searching for alarm data related to the designated alarm data in a time series from the first aid database 125 will be described with reference to Figs. 4 and 7. In this case, the Web server 12 (presentation unit 121) acquires alarm master information to which the currently occurred alarm corresponds and another piece of alarm master information having a time series relationship with the alarm master information (step S11). Next, the Web server 12 (presentation unit 121) acquires the first aid associated with the alarm master information, another piece of alarm master information having a time series relationship with the alarm master information, and information relating to another piece of alarm master information such as a first aid associated with another piece of alarm master information (step S12).

In the first aid database 125 shown in Fig. 4, the edge E18 is reversely traced from the node N19 to reach the node N12 and further, the edge E16 is traced from the node N12 to reach the node N13, and the edge E15 is traced from the node N12 to reach the node N11 and further the edge E17 is traced from the node N13 to reach the node N14. Then, the first aid nodes N15 to N18 can be searched by tracing the instruction edges E11 to E14 from the nodes N11 to N14. In this case, the display region 45 in Fig. 8 includes alarm data corresponding to the node N11, the node N13, and the node N14. For example, in a case where another alarm master is selected in the display region 45 of Fig. 8, the Web server 12 (presentation unit 121) can present, to the user terminal 6, information for displaying information such as a first aid associated with the selected alarm master on, for example, a pop-up screen. In Fig. 4, the nodes N15, N17, and N18 surrounded by a broken line block are information that is recommended as information that is preferably checked.

Next, in step S3 of Fig. 5, the comment or the document is registered for the current alarm. In this case, the node N21 of new comment and the node N20 of document information, which are associated with the node N19 of current alarm shown in Fig. 4, are generated.

As another example, in a case where replacement construction is implemented due to a decrease in pump performance, a load exceeding the setting may be applied to a pipe or a flange on a downstream side of a connected pump. As a result, the rare alarm may occur. In a case where the relationship between each apparatus and alarm is found by the simulator function, the construction history (for example, node N22) of each apparatus and the alarm master are associated with each other on the knowledge base in the first aid database 125 as shown in Fig. 4, and a related first aid is recommended when the construction actually occurs. In a case where a random period elapses after the installation of each apparatus, determination is made that "alarm caused by replacement construction of apparatus does not occur", and the relationship between the construction history and the alarm master is deleted. With the deletion, it is possible to improve the accuracy of the knowledge base.

As an example of detecting the occurrence of construction and recommending the first aid, a regular inspection management system or the like (not shown, system that manages history of construction result) and the first aid database 125 are linked in advance, and when the construction actually occurs and the result is registered in the regular inspection management system, the result is also registered in the construction history (for example, node N22) of the first aid database 125.

Then, the construction information or the rare alarm that is thought to occur from this construction is displayed in advance on the screen 40a at the timing when the result is registered. When these pieces of information are clicked, the related first aid is recommended to prompt a response.

### (Action/Effect)

According to the present embodiment, in addition to the knowledge for the occurred alarm in actual operation, the knowledge for the occurred rare alarm in a pseudo manner is aggregated in one knowledge base. The aggregation leads to an improvement in the accuracy of the knowledge. Further, since the operator can check, register, and update the knowledge for various alarms including the rare alarm, it can be expected that the operator's ability to respond to troubles improves. As described above, according to the present embodiment, it is possible to appropriately present the first aid for the alarm only by selecting the alarm data.

### (Other Embodiments)

Although the embodiment of the present disclosure has been described in detail with reference to the drawings, the specific configuration is not limited to the embodiment and includes a design change and the like within a range not departing from the gist of the present disclosure.

In the above embodiment, only one plant 2 is the monitoring target, but the present disclosure is not limited thereto. For example, a plurality of plants 2 may be the monitoring target. Further, the monitoring target is not limited to the plant 2 and may be a device, an apparatus, or a unit that is not installed in the plant. Further, the registration information may be one of the comment and the document information. Further, the first aid database 125 is not limited to the graph database, and may be a database of another format or may be a combination of the database of another format and the graph database. Further, in the above embodiment, the first aid presentation system 1 processes the alarm data issued by the plant 2 or the simulator 5. However, the first aid presentation system 1 may process the event data in addition to (or instead of) the alarm data. In this case, in the present application, the word "alarm" can be read as the word "alarm/event" (meaning at least one of alarm or event).

### <Computer Configuration>

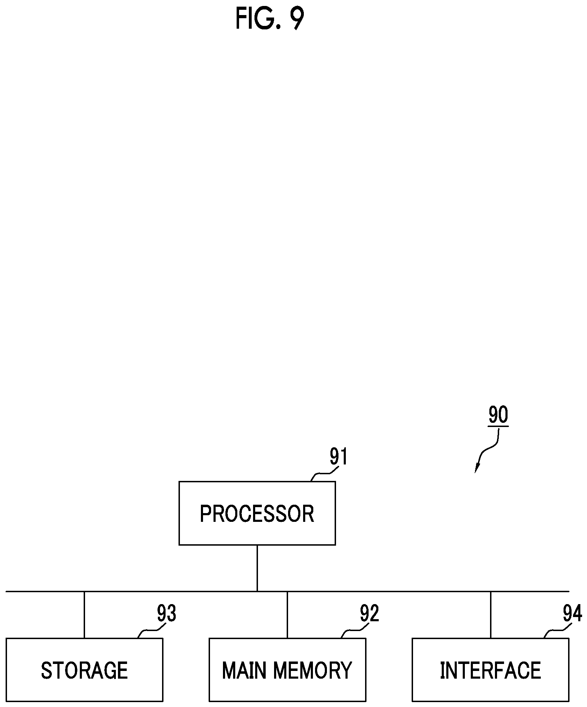

Fig. 9 is a schematic block diagram showing a configuration of a computer according to the embodiment.

A computer 90 includes a processor 91, a main memory 92, a storage 93, and an interface 94.

The above first aid presentation system 1 is implemented in the computer 90. An operation of each processing unit described above is stored in the storage 93 in the form of a program. The processor 91 reads out the program from the storage 93, loads the program into the main memory 92, and executes the above processing according to the program. The processor 91 ensures a storage area corresponding to each storage unit described above in the main memory 92 according to the program.

The program may be intended to realize some of functions performed by the computer 90. For example, the program may perform the function in combination with another program already stored in the storage or in combination with another program implemented in another device. In another embodiment, the computer may include a custom large scale integrated circuit (LSI) such as a programmable logic device (PLD) in addition to or in place of the above configuration. Examples of the PLD include a programmable array logic (PAL), a generic array logic (GAL), a complex programmable logic device (CPLD), and a field programmable gate array (FPGA). In this case, some or all of the functions realized by the processor may be realized by the integrated circuit.

Examples of the storage 93 include a hard disk drive (HDD), a solid state drive (SSD), a magnetic disk, an optical magnetic disk, a compact disc read only memory (CD-ROM), a digital versatile disc read only memory (DVD-ROM), and a semiconductor memory. The storage 93 may be an internal medium directly connected to a bus of the computer 90 or may be an external medium connected to the computer 90 via the interface 94 or a communication line. In a case where the program is distributed to the computer 90 through the communication line, the computer 90 that receives the distribution may load the program into the main memory 92 and execute the above processing. In at least one embodiment, the storage 93 is a non-transitory tangible storage medium.

### <Additional Notes>

The first aid presentation system 1 described in each embodiment is grasped as follows, for example.
(1) A first aid presentation system 1 according to a first aspect includes a storage unit 124 that stores one piece or a plurality of pieces of alarm master information associated with each alarm issued from one or a plurality of monitoring targets (plant 2, unit 3), information representing each first aid associated with each piece of the alarm master information, and information (edges E15, E16, and E17) representing a time series relationship between the respective pieces of alarm master information, and a presentation unit 121 that acquires, from the storage unit 124, and presents the first aid (node N16) associated with the alarm master information (node N12) corresponding to a designated alarm (node N19) and information (nodes N15, N17, N18, and the like) relating to another piece of the alarm master information (nodes N11, N13, and N14) having the relationship with the alarm master information. According to the present embodiment and each of the following embodiments, it is possible to appropriately present a first aid for a designated alarm.
(2) In the first aid presentation system 1 according to a second aspect, which is the first aid presentation system 1 of (1), the storage unit 124 further stores work history information (node N22) relating to a work history for the monitoring target and information associating the work history information with one piece or a plurality of pieces of the alarm master information (node N12), and the presentation unit 121 further acquires, from the storage unit 124, and presents, in a case where the alarm master information (node N12) corresponding to the designated alarm (node N19) is associated with the work history information (node N22), information (for example, information indicating first aid) relating to another one piece or a plurality of other pieces of the alarm master information associated with the work history information.
(3) In the first aid presentation system 1 according to a third aspect, which is the first aid presentation system 1 of (2), the information associating the work history information with the one piece or a plurality of pieces of the alarm master information is deleted in a case where a predetermined time has elapsed. According to the present aspect, it is possible to improve the accuracy of the knowledge base.

### Industrial Applicability

According to each aspect of the present invention, it is possible to appropriately present the first aid. Reference Signs List

1: first aid presentation system
2: plant
3: unit
4, 6: user terminal
5: simulator
11, 13: database server
12: Web server
121: presentation unit
122: registration unit
123: database management unit
124: storage unit
125: first aid database

## Claims

1. A first aid presentation system comprising:
a storage unit that stores one piece or a plurality of pieces of alarm master information associated with each alarm issued from one or a plurality of monitoring targets, information representing each first aid associated with each piece of the alarm master information, and information representing a time series relationship between the respective pieces of alarm master information; and
a presentation unit that acquires, from the storage unit, and presents the first aid associated with the alarm master information corresponding to a designated alarm and information relating to another piece of the alarm master information having the relationship with the alarm master information.

2. The first aid presentation system according to claim 1,
wherein the storage unit further stores work history information relating to a work history for the monitoring target and information associating the work history information with one piece or a plurality of pieces of the alarm master information, and
the presentation unit further acquires, from the storage unit, and presents, in a case where the alarm master information corresponding to the designated alarm is associated with the work history information, information relating to another one piece or a plurality of other pieces of the alarm master information associated with the work history information.

3. The first aid presentation system according to claim 2,
wherein the information associating the work history information with the one piece or a plurality of pieces of the alarm master information is deleted in a case where a predetermined time has elapsed.

4. A first aid presentation method comprising:
a step of using a storage unit that stores one piece or a plurality of pieces of alarm master information associated with each alarm issued from one or a plurality of monitoring targets, information representing each first aid associated with each piece of the alarm master information, and information representing a time series relationship between the respective pieces of alarm master information to acquire, from the storage unit, and present the first aid associated with the alarm master information corresponding to a designated alarm and information relating to another piece of the alarm master information having the relationship with the alarm master information.

5. A program that causes a computer to execute:
a step of using a storage unit that stores one piece or a plurality of pieces of alarm master information associated with each alarm issued from one or a plurality of monitoring targets, information representing each first aid associated with each piece of the alarm master information, and information representing a time series relationship between the respective pieces of alarm master information
to acquire, from the storage unit, and present the first aid associated with the alarm master information corresponding to a designated alarm and information relating to another piece of the alarm master information having the relationship with the alarm master information.
